# EUROPEAN PATENT SPECIFICATION

(11) **EP 1 958 440 B1**
(45) Date of publication and mention of the grant of the patent: **11.05.2016**
(21) Application number: 06823702.3
(22) Date of filing: 24.11.2006
(51) Int. Cl.: H04H 20/28, H04H 60/27, H04H 60/72, H04N 21/433, H04N 21/434, H04N 21/458

(54) **DIGITAL MULTIMEDIA BROADCASTING RECEIVER, PROGRAM VIEWING METHOD**
DIGITAL-MULTIMEDIA-AUSSTRAHLUNGSEMPFÄNGER, PROGRAMMBETRACHTUNGSVERFAHREN
RECEPTEUR DE RADIODIFFUSION MULTIMEDIA NUMERIQUE ET PROCEDE DE VISUALISATION DE PROGRAMME

(30) Priority: 28.11.2005 KR 20050114116
(43) Date of publication of application: 20.08.2008
(73) Proprietor: LG Electronics, Inc., Seoul 150-875 (KR)
(72) Inventor: MOON, Kyoung soo, Seoul 137-900 (KR); LEE, Sang hyup, Seoul 156-775 (KR); KIM, Jun, Seoul 137-779 (KR)
(74) Representative: Cabinet Plasseraud
(86) International application number: PCT/KR2006/004992
(87) International publication number: WO 2007/061258

(56) References cited:
- EP-A2- 1 501 222
- DE-C1- 4 422 015
- JP-A- 2002 281 404
- KR-A- 20050 073 007
- US-A1- 2005 210 504
- "Digital Audio Broadcasting (DAB); Guidelines and rules for implementation and operation; Part 2: System features; ETSI TR 101 496-2", IEEE, LIS, SOPHIA ANTIPOLIS CEDEX, FRANCE, vol. BC, no. V1.1.2, 1 May 2001 (2001-05-01), XP014004881, ISSN: 0000-0001

## Description

### Technical Field

The present invention relates to a digital multimedia broadcasting receiver, a program viewing method and program recording method thereof. More particularly, the present invention relates a digital multimedia broadcasting receiver, a program viewing method and recording method thereof, by which a user is able to continuously view a relevant program if a predetermined program under current viewing is switched over to and continuously broadcasted in another channel, and a predetermined program can be effectively recorded.

### Background Art

The digital multimedia broadcasting (DMB) provides not only a variety of additional data services such as high quality audio information and traffic information, but also video information with extension thereof. Furthermore, the DMB can provide a plurality of programs in a single ensemble.

A digital multimedia broadcasting receiver capable of receiving the digital multimedia broadcasting can encounter unexpected limitations or circumstances according to situations of a broadcasting station when the digital multimedia broadcasting is received, viewed or video-recorded (hereinafter referred to as recording).

For example, there may be a case where a program broadcasted via a predetermined channel is switched over to other channels and extensively broadcasted due to situations of a broadcasting station. In this case, there arises a cumbersomeness of switching a receiving channel to other channels via a separate key manipulation in order for a user of a digital multimedia broadcasting to continuously view a relevant program. Therefore, it would be necessary for a user to continuously view a predetermined program by a DMB receiver automatically changing a receiving channel when a program broadcasted via a predetermined channel is switched over to other channels and extensively broadcast.

Furthermore, when there pops up urgent news, a broadcasting station temporarily stops a currently broadcasted program to broadcast the urgent news, and when the broadcasting of the urgent news is over, the temporarily stopped program is continuously broadcasted.

Under this circumstance, if the digital multimedia broadcasting receiver is in the process of recording the program, the broadcasting of the urgent news is recorded at a midsection of the recorded program. Or, the digital multimedia broadcasting receiver records right before the urgent news is broadcasted, and does not record a relevant program subsequent to the broadcasting of the urgent news.

As a result, if another program different from the currently recorded program such as an urgent news or the like is broadcasted while a program broadcasted via a predetermined channel is being recorded, it would require to block said another program from being recorded, and to allow the originally recorded program to be continuously recorded if the originally recorded program is broadcasted again.

Furthermore, even if a digital multimedia broadcasting receiver records a predetermined program and the recorded program is switched over to another channel by a broadcasting station for an extended broadcasting, it is necessary for the digital multimedia broadcasting receiver to automatically switch the channel and to continuously record the predetermined program.

DE4422015 discloses a process for transmission and playback of digital data. Document "Digital Audio Broadcasting (DAB); Guidelines and rules for implementation and operation; Part 2: System features; ETSI TR 101 496-2" (1 May 2001 ISSN: 0000-0001) provides additional information for aiding interpretation of the on-air signal and to assist broadcasters and manufacturers to implement systems using the specification features.

### Disclosure of Invention

### Technical Solution

An object of the present invention is to provide a digital multimedia broadcasting receiver and a program viewing method thereof, by which a digital multimedia broadcasting receiver automatically switches a receiving channel to allow a user to continuously view a predetermined program that is extensively broadcasted when the predetermined program is switched to other channels and extensively broadcasted.

Another object is to provide a digital multimedia broadcasting receiver and a program recording method thereof, by which, if other programs such as an urgent news and the like are broadcasted in the midst of a predetermined program being recorded, the other programs are not recorded, but the original predetermined program is continuously recorded after the other programs are completed in broadcasting.

Still another object is to provide a digital multimedia broadcasting receiver and a program recording method thereof, by which, in a case that a predetermined program is switched over to other channels and extensively broadcasted in the midst of the predetermined program being recorded, a digital multimedia broadcasting receiver automatically switches receiving channels to extensively record the extensively broadcasted program.

In one general aspect, a digital multimedia broadcasting receiver is provided according to claim 1.

In another general aspect, a program viewing method of a digital multimedia broadcasting receiver is provided according to claim 3.

In still another general aspect, a program recording method of a digital multimedia broadcasting receiver is provided according to claim 4.

### Advantageous Effects

There is an advantage in that if a predetermined program currently received by a digital multimedia broadcasting receiver, viewed or recorded by a viewer is switched over to another channel and is to be extensively broadcasted, the predetermined program is switched over to the other channel to allow a related program to be extensively received without separate key manipulation by the viewer.

Another advantage is that if other programs such as urgent news and the like are broadcasted in the midst of a predetermined program being recorded, the other programs are not recorded, but the originally predetermined program can be continuously recorded again if the predetermined program is to be broadcasted.

### Brief Description of the Drawings

The accompanying drawings, which are included to provide a further understanding of the invention and are incorporated in and constitute a part of this application, illustrate embodiment(s) of the invention and together with the description, serve to explain the principle of the invention. In the drawings:
FIG.1 is a structural diagram of a transmission frame in a digital multimedia broadcasting;
FIGS.2 and 3 are structural diagrams explaining XML EPG document;
FIG.4 illustrates a structure of an exemplary trigger type defined by the present invention;
FIG.5 is a block diagram illustrating a configuration of a digital multimedia broadcasting receiver according to the present invention;
FIG.6 is a flowchart illustrating a program viewing method according to the present invention;
FIG.7 is a drawing explaining in detail a program viewing method according to the present invention;
FIGS. 8 and 9 are a flowchart illustrating a program recording method according to the present invention; and
FIGS. 10 and 11 are drawings explaining in detail a program recording method according to the present invention.

Throughout the drawings, like reference numerals will be understood to refer to like parts, components and structures.

### Best Mode for Carrying Out the Invention

Certain exemplary embodiments of the present invention will be described in detail herein below with reference to the accompanying drawings. In the following description, detailed descriptions of functions and configurations incorporated herein that are well known to those skilled in the art are omitted for clarity and conciseness.

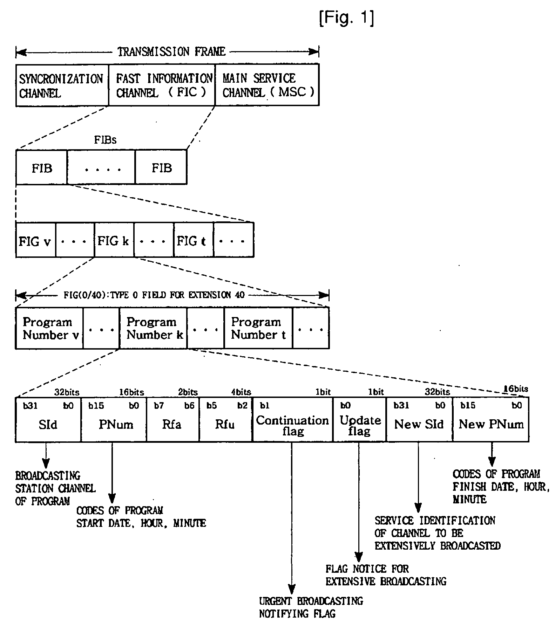

FIG.1 is a structural diagram of a transmission frame in a digital multimedia broadcasting.

Referring to FIG.1, a transmission frame in a digital multimedia broadcasting includes synchronization channel parts, Fast Information Channel (FIC) parts and Main Service Channel (MSC) parts. The MSC part includes a plurality of audio information, video information and data information. The data information comprises Electronic Program Guide (EPG) information.

The FIC part intended for providing information on the plurality of audio, video and data included in the MSC part comprises a plurality of Fast Information Blocks (FIBs), and each of the plurality of FIBs includes a plurality of Fast Information Groups (FIGs).

In the above-noted transmission frame, the present invention proposes FIG 0/XX (Fast Information Group, Type 0 field for extension XX) field, where XX is a single value (a binary natural number) currently not used in the plurality of FIGs. In other words, FIG 0/0∼FIG 0/31 (FIG Type 0 field for extension 0∼FIG Type 0 field for extension 31) is a data format defined by the ETSI EN 300 401 V1.3.3(2001-05) standards. The present invention proposes an exemplary FIG currently not defined, i.e., FIG 0/40 (FIG Type 0 field for extension 40).

The FIG 0/XX proposed by the present invention comprises a plurality of program number blocks. Each program number block includes a 32-bit SId (Service Identifier), a 16-bit PNum (Program Number), a 2-bit Rfa (Reserved for future addition), a 2-bit Rfu (Reserved for future use), a 1-bit Continuation flag, a 1-bit Update flag, a 32-bit New SId and a 16-bit New PNum.

The Sid, which is a service ID indicative of a broadcasting channel currently broadcasting a predetermined program, uses a 32-bit for expressing channels of a broadcasting station. The PNum, which is a code for discerning a plurality of programs broadcasted by channels of a broadcasting station, consists of a date, an hour and a minute on which broadcasting of a relevant program has started.

A plurality of encoded audio streams and a plurality of data are subjected to a channel coding and then are multiplexed into one bit stream along with system data, which is called an ensemble. Generally, one digital broadcasting station provides one ensemble in which a plurality of programs is delivered. The PNum is employed for discerning one program in the plurality of programs delivered in one ensemble.

The continuation flag is to broadcast urgent news and the like. In other words, the continuation flag temporarily stops a currently broadcasting program to broadcast programs such as urgent news and the like, and when the program such as urgent news is completed in broadcasting, the continuation flag notifies that the original program is to be again continuously broadcasted, where the continuation flag has a flag value of 0 or 1.

The update flag is to notify that a currently broadcasted program is changed to another program and is to be extensively broadcasted, where the update flag has a flag value of 0 or 1. The New Sid is a service ID of a channel extensively broadcasted when a currently broadcasted program having an update flag value of 1 is switched to another channel and extensively broadcasted. The New PNum is a code consisting of a date, an hour and a minute on which an extensive broadcasting is started when a currently broadcasted program having an update flag value of 1 is switched to another channel and extensively broadcasted.

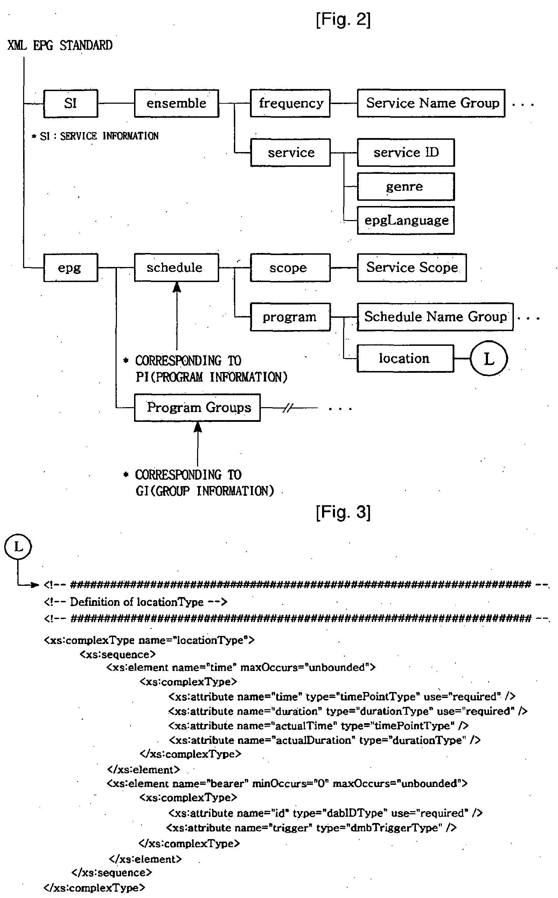

FIG.2 illustrates a structural diagram of EPG information contained in MSC as data information in the transmission frame.

Referring to FIG.2, the EPG information contained in the MSC comprises XML (extensible Markup Language). The XML EPG format is largely classified into two elements, i.e., SI (Service Information) and epg elements. The SI element contains SI information comprising the EPG information and various related information. The SI element contains therebeneath ensemble information, and the ensemble includes frequency information and services comprising the ensemble as a sub-structure of the ensemble. The ensemble includes Service NameGroup as a sub-structure of the ensemble frequency, and the service includes service ID, genre and epgLanguage as a sub-structure thereof.

Furthermore, the epg element contains PI (Program Information) comprising the EPG information and various information related to the GI (Group Information) information. The epg element related to the PI (Program Information) includes as a sub-structure thereof schedule information, program start and finish time information (scope), detailed information of broadcasting programs, and locations of each broadcasting program.

Referring to FIG.3, the location includes therebeneath a bearer element and the bearer element contains a dmbTriggerType according to the present invention as an attribute.

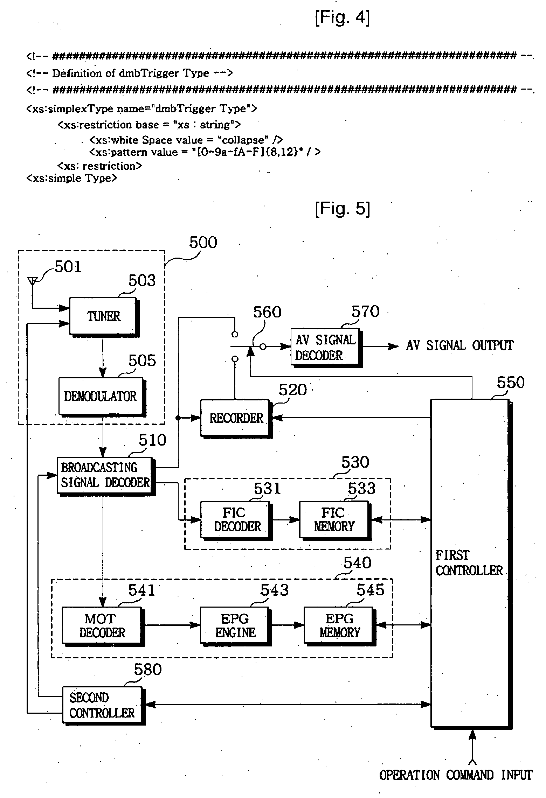

FIG.4 illustrates a structure of an exemplary trigger type defined by the present invention, where the dmbTriggerType includes a 32-bit Service ID (Sid), and a 16-bit Program Number (PNum).

Referring to FIG.4, the dmbTriggerType may be defined by a string of 8∼12 digits structurally combined by numbers and characters within 0-9, a-f or A-F, i.e., "c2213ac11145".

The EPG information that includes thus-defined dmbTriggerType is encoded in binaries for transmission, and divided into Service Information (SI), GI (Group Information) and one day s PI (Program Information), and then grouped into each MOT (Multimedia Object Transfer) object to be provided from EPG information providers to a digital multimedia broadcasting receiver via a broadcasting signal.

FIG.5 is a block diagram illustrating a configuration of a digital multimedia broadcasting receiver according to the present invention, where the receiver is comprised of a broadcasting signal receiver (500), a broadcasting signal decoder (510), a recorder (520), a FIC provider (530), an EPG provider (540), a first controller (550), a switch (560), an AV signal decoder (570) and a second controller (580).

The broadcasting signal receiver (500) includes an antenna (501), a tuner (503) and an Orthogonal Frequency-Division Multiplexing (OFDM) demodulator (505). The tuner (503) receives a digital multimedia broadcasting signal of a predetermined channel via the antenna (501). The digital multimedia broadcasting signal received by the tuner (503) is demodulated by the OFDM modulator (505) to be outputted in a form referred to as frequency-deinterleaved OFDM symbols. The frequency-dein-terleaved symbols are divided into FIC and MSC according to attributes thereof. The OFDM symbols outputted from the OFDM demodulator (505) may be time-deinterleaved via a time deinterleaver to be rearranged and outputted in CIF (Common Interleaved Frame) unit which is a logical frame unit.

The OFDM symbols outputted from the ODFM demodulator (505) are decoded by the broadcasting signal decoder (510). The broadcasting signal decoder (510) transmits to the FIC provider (530) the FIC inputted from the OFDM demodulator (505), decodes the MSC to output a broadcasting program, separates the EPG information included in the MSC and outputs the EPG information to the EPG provider (540).

The FIC provider (530) comprises a FIC decoder (531) and a FIC memory (533). The FIC decoder (531) decodes the FIC provided by the broadcasting signal decoder (510) to extract Sid, PNum, Rfa, Rfu, continuation flag, update flag, New Sid and New PNum contained in the FIX 0/XX and then stores in the FIC memory (533).

The EPG provider (540) comprises a MOT (Multimedia Object Transfer) decoder (541), an EPG engine (543) and an EPG memory (545). The MOT decoder (541) MOT-decodes the EPG information inputted from the broadcasting signal decoder (510). The EPG engine parses the MOT-decoded data to extract the Service Information and Program Information, and then inserts into a corresponding field of an EPG table stored in the EPG memory (545) to form program organizing information. Furthermore, the EPG engine parses each channel information, program information, information on program start time and finish time included in the EPG information along with trigger type, and then stores in the EPG memory (545) according to the broadcasting programs.

The first controller (550) receives an operation command from outside to control operation of a broadcasting receiver in response to the received operation command.

If the operation command received from the outside is a viewing command of a predetermined program broadcasted via a predetermined channel, the first controller (550) controls the second controller (580), and the second controller (580) controls the tuner (503) and the broadcasting signal decoder (510) in response to the control thereof. Successively, the tuner (503) tunes the broadcasting signal of a predetermined channel, and the tuned broadcasting signal is demodulated by the demodulator (505), and the demodulated broadcasting signal is decoded by the broadcasting signal decoder (510), whereby an AV signal of a predetermined program is outputted.

The AV signal of a predetermined program outputted from the broadcasting signal decoder (510) is inputted into the AV signal decoder (570) via a switch (560), where the AV signal is decoded, and the decoded AV signal is outputted to enable a viewer to view.

Under this circumstance, the first controller (550) continuously monitors the FIG 0/XX stored in the FIC memory (533) to determine whether the update flag value is 1. In other words, the first controller (550) determines whether the currently viewed program is extensively being broadcasted on other channel.

If the update flag value is 1, the first controller (550) reads from the FIC memory New Sid which is a service ID of a channel on which the program is extensively broadcasted and New PNum which is a code composed of a date, an hour and a minute on which the extensive broadcasting starts. Furthermore, the first controller (550) continuously monitors the FIC 0/XX to determine whether the PNum has been changed, and if the PNum has been changed, the controller (550) switches over to a channel corresponding to the New Sid and New PNum to enable a viewer to continuously view the predetermined program extensively broadcasted.

In other words, the second controller (580) controls the tuner (503) and the broadcasting signal decoder (510) in response to the control of the first controller (550) to allow the tuner (503) to receive a broadcasting signal of a channel corresponding to the New Sid, and the broadcasting signal decoder (510) outputs a program corresponding to the New PNum, to enable a viewer to continuously view the extensively broadcasted program.

If a recording command is received from outside, the first controller (550) checks the PNum of a program to be recorded in the EPG memory (545) and monitors the FIC 0/XX stored in the FIC memory (533) to determine whether the PNum of the FIC 0/XX is the same as the PNum of the program to be recorded. As a result of the determination, if both PNums are identical, meaning that the broadcasting of a program to have received the recording command has started, the first controller (550) controls the recorder (520) to allow the program having received the recording command to be recorded.

Under this state, the first controller (550) continuously monitors the FIG 0/XX to determine whether the continuation flag or the update flag value is 1. As a result of the determination, if the continuation flag value is 1, the currently recorded program is temporarily stopped, meaning that other programs such as urgent news or the like are to be broadcasted, and the first controller (550) determines whether the PNum has been changed in the FIG 0/XX.

As a result of the determination, if the PNum contained in the FIG 0/XX has been changed, which means that programs different from the currently recorded program are being broadcasted, the first controller (550) controls the recorder (520) to temporarily stop the recording operation. Thereafter, the first controller (550) determines whether the PNum contained in the FIG 0/XX is the identical to the PNum of the program whose recording has been temporarily stopped, and if they are identical, the program of a broadcasting such as the urgent news is finished, and the original program is broadcasted again, where the first controller (550) controls the recorder (520) to continue the recording of the program.

As a result of the determination, if the update flag value is 1, which means notifying that the currently recording program is changed to and broadcasted on other channel, the first controller (550) checks the New Sid and New PNum contained in FIG 0/XX, and checks the PNum of the FIG 0/XX to determine whether the PNum contained in the FIG 0/XX has been changed.

As a result of the determination, if the PNum included in the FIG 0/XX has been changed, which defines that the currently recorded program has been changed to other channel and the broadcasting has started, the first controller (550) receives programs corresponding to the New Sid and New PNum contained in FIG 0/XX to allow the recorder (520) to continuously record the program being extensively broadcasted on other channel.

Furthermore, if both the continuation flag and update flag values contained in the FIG 0/XX are not 1, the first controller (550) determines whether the PNum of FIG 0/XX has been changed. The change of the PNum contained in the FIG 0/XX means that the broadcasting of a program currently being recorded has been finished, where the first controller (550) controls the recorder (520) to stop recording.

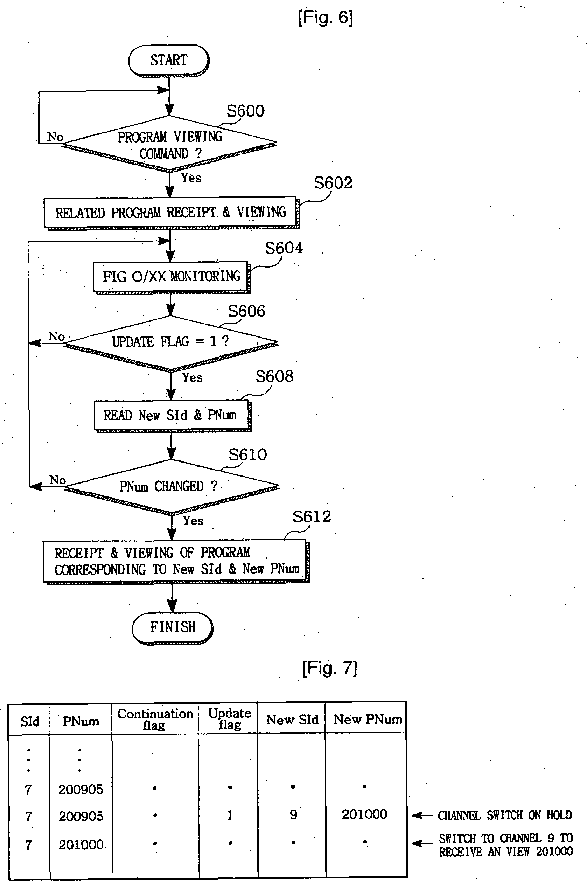

Meanwhile, FIG.6 is a flowchart illustrating a program viewing method according to the present invention.

Referring to FIG.6, the first controller (550) determines whether a viewing command of a predetermined program has been inputted from outside (S600). If it is determined that the viewing command of a predetermined program has been inputted, the first controller (550) controls the second controller (580), and the second controller (580) controls the tuner (503) and the broadcasting signal decoder (510) in response to the control thereof to prompt the tuner (503) to tune a broadcasting signal of a predetermined channel, whereby a predetermined program contained in the tuned broadcasting signal is decoded by the broadcasting signal decoder (510) to enable a view to view the program(S602).

At this time, the FIC outputted by the broadcasting signal decoder (510) is decoded by the FIC decoder (531) to be stored in the FIC memory (533).

Under this state, the first controller (550) keeps monitoring the FIG 0/XX stored in the FIC memory (533) (S604), and determines whether the update flag value contained in the FIG 0/XX is 1 (S606). In other words, determination is made as to whether the program currently being viewed by a view has been switched over to another channel and extensively broadcasted.

If it is determined that the update flag value is 1, the first controller (550) reads New Sid which is a service ID of a channel extensively broadcasting the program contained in the FIC memory (533), and the New PNum which is a code composed of a date, an hour and a minute on which the extensive broadcasting starts (S608). Furthermore, the first controller (550) determines whether the PNum of the FIG 0/XX has been changed (S610).

If it is determined that the PNum has been changed, the first controller (550) controls the second controller (580) to allow a program corresponding to the New Sid and the New PNum to be received and viewed (S612): In other words, that the PNum has been changed means that the program having been viewed by a viewer is finished and another program is being broadcasted. Therefore, the first controller (550) so controls as to receive a program corresponding to the New Sid and the New PNum, whereby the viewer can continuously view the program extensively broadcasted on the other channel.

FIG.7 is a drawing explaining in detail a program viewing method.

Referring to FIG.7, if the update flag value is 1 while a predetermined program whose PNum is 200905 is received and viewed on a channel 7 whose Sid is 7, the controller (550) ascertains 9 and 201000 which are New Sid and New PNum values.

Under this circumstance, the first controller (550) keeps ascertaining the PNum value, and if it is determined that the PNum value has been changed, i.e., if the PNum value has been changed from 200905 to 201000, the controller (550) receives a program whose New PNum value is 201000 corresponding to channel 9 corresponding to the New Sid to allow a viewer to keep viewing the predetermined program that has been viewed so far.

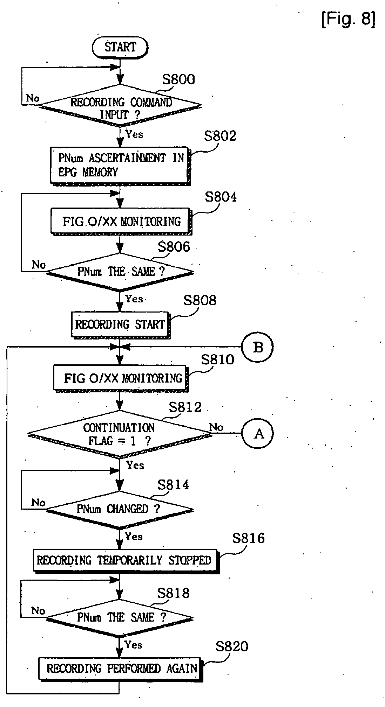

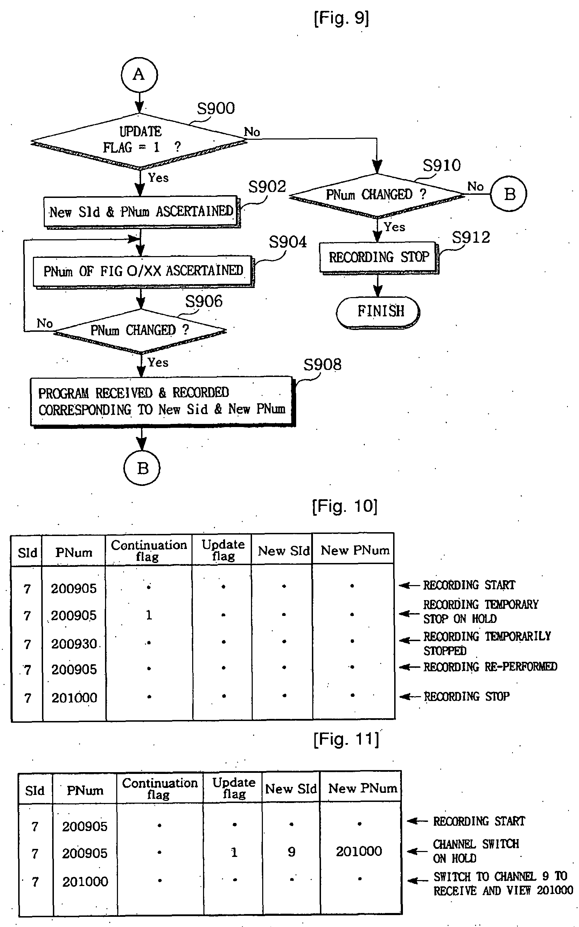

FIGS.8 and 9 are a flowchart illustrating a program recording method.

Referring to FIG.8, the first controller (550) determines whether a recording command has been inputted from outside (S800). If the recording command has been inputted, the first controller (550) ascertains PNum of a program to be recorded in the recording command contained in the EPG memory (545) (S802). Successively, the first controller (550) monitors the FIG 0/XX stored in the FIC memory (533) (S804) to determine whether the PNum of FIG 0/XX is the same as the PNum of the program to be recorded and ascertained by the EPG memory (545) (S806).

If both PNums are identical, the first controller (550) controls the recorder (520) to record a predetermined program corresponding to PNum outputted from the broadcasting signal decoder (510) (S808).

Under this condition, the first controller (550) keeps monitoring the FIG 0/XX (S810) to determine whether the continuation flag value is 1 (S812). If it is determined that a continuation flag value is 1, the currently recorded program is temporarily stopped (Which is for broadcasting other programs such as urgent news, etc.), the first controller (550) determines whether the PNum contained in FIG has been changed (S814).

As a result of the determination, if the PNum of FIG 0/XX has been changed, which means that programs other than the currently recorded program are being broadcasted, the first controller (550) controls the recorder (520) to temporarily stop the recording operation (S816) and determines whether the PNum of FIG 0/XX is the same as the PNum of the program that has been temporarily stopped (S818).

If it is determined that both PNums are identical, the broadcasting of program such as urgent news and the like is completed; and the original program is broadcasted again, where the first controller (550) controls the recorder (520) to keep recording the program (S820).

If the continuation flag value is not 1, the first controller (550) determines whether the update flag value of FIG 0/XX is 1, as illustrated in FIG.9 (S900).

If the update flag value of FIG 0/XX is 1, which defines that the broadcasting of the currently recorded program is changed to another channel and kept broadcasting, the first controller (550) ascertains New Sid and New PNum of FIG 0/XX (S902), and ascertains PNum of FIG 0/XX (S904) to determine whether the PNum of FIG 0/XX has been changed (S906).

If the PNum of FIG 0/XX has been changed (which means that the program currently being recorded has been changed to another channel and broadcasting has started), the first controller (550) receives a program corresponding to the New Sid and New PNum of FIG 0/XXX to allow the recorder to keep recording the program extensively broadcasted on the other channel (S908).

If the continuation flag value and the update flag value of FIG 0/XX are not 1, the first controller (550) determines whether the PNum of FIG 0/XX has been changed (S910). The change of the PNum contained in FIG 0/XX defines that the broadcasting currently being recorded has been terminated, so that the first controller (550) controls the recorder (520) to stop the recording (S912) and terminates the operation.

FIGS. 10 and 11 are drawings explaining in detail a program recording method according to the present invention.

Referring to FIG.10, if a continuation flag value is 1 while a predetermined program whose PNum is 200905 is received and recorded on a channel 7 whose Sid is 7 by the recorder (520), the controller (550) puts a recording temporary stop on hold.

Under this circumstance, the first controller (550) keeps ascertaining the PNum, and if the PNum is changed to 200930, the first controller (550) controls the recorder (520) to temporarily stop the recording operation.

The first controller (550) keeps ascertaining the PNum, and if the PNum is the same as the PNum of a program whose recording has been temporarily stopped, i.e., if the PNum has been changed to 200905, the first controller (550) controls the recorder (520) to perform the recording operation again.

Furthermore, if the PNum has been changed to 201000, while the continuation flag value and the update flag value are not 1, the first controller (550) determines that broadcasting of the program under recording has been terminated, and controls the recorder (520) to stop the recording.

Referring to FIG.11, if an update flag value is 1 while a predetermined program whose PNum is 200905 is received and recorded on a channel 7 whose Sid is 7 by the recorder (520), the controller (550) puts change of the received channel on hold, and ascertains 9 and 201000 which are values of New Sid and New PNum.

Under this state, the first controller (550) keeps ascertaining the value of PNum, and if it is determined that the value of the PNum has been changed as a result of the ascertainment, i.e., if the value of the PNum has been changed from 200905 to 201000, the first controller (550) receives a program whose New PNum value is 201000 on channel 9 which corresponds to the New Sid to allow a view to continuously view the predetermined program the recorder (520) has been currently recorded.

As apparent from the foregoing, there is an advantage in the digital multimedia broadcasting receiver thus described according to the present invention in that a viewer can continuously view a relevant program if a predetermined program under current viewing is switched over to and continuously broadcasted on another channel, so that the viewer can continuously view or record the predetermined program without using a separate key manipulation.

Another advantage is that if other programs such as urgent news and the like are broadcasted in the midst of a predetermined program being recorded, the other programs are not recorded, but the original predetermined program can be continuously recorded again without recording the other programs if the original program is broadcasted again.

### Industrial Applicability

If a predetermined program under current viewing or recording is switched over to and extensively broadcasted on another channel in a digital multimedia broadcasting receiver, a viewer can continuously view or record a relevant program being extensively broadcasted on the other channel without a separate key manipulation by the viewer.

If other programs such as urgent news and the like are broadcasted in the midst of a predetermined program being recorded, the other programs are not recorded, but the original predetermined program can be continuously recorded again without recording the other programs if the original program is broadcasted again.

## Claims

1. A digital multimedia broadcasting receiver, **characterized by** comprising:
- a broadcasting signal receiver (500) configured to receive a digital multimedia broadcasting signal;
- a broadcasting signal decoder (510) configured to decode the digital multimedia broadcasting signal received by the broadcasting signal receiver (500);
- an Audio Video (AV) signal decoder (570) configured to decode streams of AV signals outputted by the broadcasting signal decoder (510);
- a Fast Information Channel (FIC) provider (530) configured to parse and store an FIC outputted from the broadcasting signal decoder (510);
- an Electronic Program Guide (EPG) provider (540) configured to parse and store EPG information outputted from the broadcasting signal decoder (510);
- a recorder (520) configured to record streams of AV signal outputted from the broadcasting signal decoder (510);
- a first controller (550) configured to:
- control a viewing and recording of a relevant program in response to a viewing and a recording command of the relevant program inputted from outside,
- switch over to another channel when the relevant program is broadcasted on the another channel due to extended broadcast, a first information on the another channel being provided by the FIC provider (530), and
- a second controller (580) configured to control the broadcasting signal receiver (500) and the broadcasting signal decoder (510) in response to the control of the first controller (550) to enable a viewer to view the relevant program, **characterized in that** the first controller (550) is further configured to:
- determine whether other programs are broadcasted by a second information stored in the FIC provider (530) in the midst of the relevant program being recorded,
- stop the recording by the recorder (520) temporarily when the other programs are broadcasted, and
- perform the recording of the recorder (520) again when the relevant program is re-broadcasted.

2. The receiver as claimed in claim 1, wherein the FIC provider (530) comprises:
- a FIC decoder (531) configured to decode the FIC outputted from the broadcasting signal decoder (510); and
- a FIC memory (533) configured to store information decoded by the FIC decoder (531) and provide the information to the first controller (550).

3. A program viewing method of a digital multimedia broadcasting receiver **characterized by**:
- receiving and displaying a program when a viewing command of the program is inputted, the program received on a channel and having a code indicating a date, an hour and a minute on which the program starts;
- determining whether the program is to be broadcasted on another channel due to extended broadcast; and
- determining a new channel and a new code of the extended broadcast, the new code indicating a date, an hour and a minute on which the extended broadcast starts;
- switching over to the new channel to allow receiving the program when the code of the program is changed to the new code.

4. A program recording method of a digital multimedia broadcasting receiver **characterized by**:
- parsing received EPG information and storing the EPG information in an EPG memory (545);
- checking a program number of a recording-designated program by the EPG memory (545) when a recording command of the recording-designated program is inputted;
- determining whether a program corresponding to the checked program number has been received;
- recording the program when it is determined that the program has been received, the program having a code indicating a date, an hour and a minute on which the program starts,
- temporarily stopping the recording of the program when it is determined that other program is to be broadcasted, the other program having other code indicating a date, an hour and a minute on which the other program starts,
- determining whether the program is re-broadcasted; and
- recording the program again when the other program is completed and the program is broadcasted again.

5. The method as claimed in claim 3, wherein information related the channel, the code, the new channel and the new code is included in Fast Information Channel (FIC) in a transmission frame in a digital multimedia broadcasting.

6. The method as claimed in claim 5, wherein the information is included in an extended area of Fast Information Group (FIG) of Fast Information Block (FIB) in the FIC.

7. The method as claimed in claim 6, wherein the determining whether the program is to be broadcasted on another channel includes determining whether the program is to be broadcasted on another channel due to the extended broadcast by checking update flag in the extended area of FIG being 1.

8. The method as claimed in claim 4, wherein information related to the code and the other code is included in FIC in a transmission frame in a digital multimedia broadcasting.

9. The method as claimed in claim 8, wherein the information is included in an extended area of FIG of FIB in the FIC.

10. The method as claimed in claim 9, wherein the determination that other program is to be broadcasted is performed by checking continuation flag in the extended area of FIG being 1.

## Patentansprüche

1. Digital-Multimedia-Ausstrahlungsempfänger, **dadurch gekennzeichnet, dass** er aufweist:
- einen Ausstrahlungssignalempfänger (500), der konfiguriert ist, um ein Digital-Multimedia-Ausstrahlungssignal zu empfangen;
- einen Ausstrahlungssignaldecoder (510), der konfiguriert ist, um das von dem Ausstrahlungssignalempfänger (500) empfangene Digital-Multimedia-Ausstrahlungssignal zu decodieren;
- einen Audio-Video-, (AV-), Signaldecoder (570), der konfiguriert ist, um AV-Signalströme zu decodieren, die von dem Ausstrahlungssignaldecoder (510) ausgegeben werden;
- eine Bereitstellungseinrichtung (530) für einen schnellen Informationskanal (FIC), die konfiguriert ist, um einen FIC, der von dem Ausstrahlungssignaldecoder (510) ausgegeben wird, zu parsen und zu speichern;
- eine Bereitstellungseinrichtung (540) für eine elektronische Programmführung (540), die konfiguriert ist, um EPG-Informationen, die von dem Ausstrahlungssignaldecoder (510) ausgegeben werden, zu parsen und zu speichern;
- eine Aufzeichnungseinrichtung (520), die konfiguriert ist, um AV-Signalströme, die von dem Ausstrahlungssignaldecoder (510) ausgegeben werden, aufzuzeichnen;
- eine erste Steuerung (550), die konfiguriert ist, um:
- eine Betrachtung und Aufzeichnung eines relevanten Programms ansprechend auf einen Betrachtungs- und Aufzeichnungsbefehl des relevanten Programms, der von außen eingegeben wird, zu steuern,
- auf einen anderen Kanal umzuschalten, wenn das relevante Programm aufgrund erweiterter Ausstrahlung auf dem anderen Kanal ausgestrahlt wird, wobei eine erste Information auf dem anderen Kanal durch die FIC-Bereitstellungseinrichtung (530) bereitgestellt wird, und
- eine zweite Steuerung (580), die konfiguriert ist, um den Ausstrahlungssignalempfänger (500) und den Ausstrahlungssignaldecoder (510) ansprechend auf die Steuerung ersten Steuerung (550) zu steuern, um einen Zuschauer in die Lage zu versetzen, das relevante Programm zu betrachten, **dadurch gekennzeichnet, dass** die erste Steuerung (550) ferner konfiguriert ist, um
- durch eine zweite Information, die in der FIC-Bereitstellungseinrichtung (530) gespeichert ist, mitten in dem relevanten Programm, das aufgezeichnet wird, zu bestimmen, ob andere Programme ausgestrahlt werden,
- das Aufzeichnen durch die Aufzeichnungseinrichtung (520) vorübergehend zu stoppen, wenn die anderen Programme ausgestrahlt werden, und
- das Aufzeichnen der Aufzeichnungseinrichtung (520) wieder durchzuführen, wenn das relevante Programm wieder ausgestrahlt wird.

2. Empfänger nach Anspruch 1, wobei die FIC-Bereitstellungseinrichtung (530) aufweist:
- einen FIC-Decoder (531), der konfiguriert ist, um den FIC zu decodieren, der von dem Ausstrahlungssignaldecoder (510) ausgegeben wird; und
- einen FIC-Speicher (533), der konfiguriert ist, um Informationen zu speichern, die von dem FIC-Decoder (531) ausgegeben werden, und die Informationen an die erste Steuerung (550) bereitzustellen.

3. Programmbetrachtungsverfahren eines Digital-Multimedia-Ausstrahlungsempfängers, **gekennzeichnet durch**:
- Empfangen und Anzeigen eines Programms, wenn ein Betrachtungsbefehl des Programms eingegeben wird, wobei das Programm auf einem Kanal empfangen wird und einen Code hat, der ein Datum, eine Stunde und eine Minute anzeigt, zu denen das Programm beginnt;
- Bestimmen, ob das Programm aufgrund erweiterter Ausstrahlung auf einem anderen Kanal ausgestrahlt werden soll; und
- Bestimmen eines neuen Kanals oder eines neuen Codes der erweiterten Ausstrahlung, wobei der neue Code ein Datum, eine Stunde und eine Minute anzeigt, zu denen die erweiterte Ausstrahlung beginnt;
- Umschalten auf den neuen Kanal, um den Empfang des Programms zuzulassen, wenn der Code des Programms auf den neuen Code geändert wird.

4. Programmaufzeichnungsverfahren eines Digital-Multimedia-Ausstrahlungsempfängers, **gekennzeichnet durch**:
- Parsen empfangener EPG-Informationen und Speichern der EPG-Informationen in einem EPG-Speicher (545);
- Prüfen einer Programmnummer eines für die Aufzeichnung bestimmten Programms **durch** den EPG-Speicher (545), wenn ein Aufzeichnungsbefehl des für die Aufzeichnung bestimmten Programms eingegeben wird;
- Bestimmen, ob ein Programm, das der geprüften Programmnummer entsprich, empfangen wurde;
- Aufzeichnen des Programms, wenn bestimmt wird, dass das Programm empfangen wurde, wobei das Programm einen Code hat, der ein Datum, eine Stunde und eine Minute anzeigt, zu denen das Programm beginnt,
- vorübergehendes Stoppen der Aufzeichnung des Programms, wenn bestimmt wird, dass ein anderes Programm ausgestrahlt werden soll, wobei das andere Programm einen Code hat, der ein Datum, eine Stunde und eine Minute anzeigt, zu denen das andere Programm beginnt;
- Bestimmen, ob das Programm erneut ausgestrahlt wird; und
- erneutes Aufzeichnen des Programms, wenn das andere Programm abgeschlossen ist und das Programm wieder ausgestrahlt wird.

5. Verfahren nach Anspruch 3, wobei Informationen, die den Kanal, den Code, den neuen Kanal und den neuen Code betreffen, in dem schnellen Informationskanal (FIC) in einem Senderahmen in einer Digital-Multimedia-Ausstrahlung enthalten sind.

6. Verfahren nach Anspruch 5, wobei die Informationen in einem erweiterten Bereich der schnellen Informationsgruppe (FIG) des schnellen Informationsblocks (FIB) in dem FIC enthalten sind.

7. Verfahren nach Anspruch 6, wobei die Bestimmung, ob das Programm auf einem anderen Kanal ausgestrahlt werden soll, die Bestimmung umfasst, ob das Programm aufgrund der erweiterten Ausstrahlung auf einem anderen Kanal ausgestrahlt werden soll, indem geprüft wird, dass der Aktualisierungsmarker in dem erweiterten Bereich der FIG 1 ist.

8. Verfahren nach Anspruch 4, wobei Informationen, die den Code und den anderen Code betreffen, in dem FIC in einem Senderahmen in einer Digital-Multimedia-Ausstrahlung enthalten sind.

9. Verfahren nach Anspruch 8, wobei die Informationen in einem erweiterten Bereich der FIG des FIB in dem FIC enthalten sind.

10. Verfahren nach Anspruch 9, wobei die Bestimmung, dass das andere Programm ausgestrahlt werden soll, durch Prüfen, dass der Fortsetzungsmarker in dem erweiterten Bereich der FIG 1 ist, durchgeführt wird.

## Revendications

1. Récepteur de diffusion multimédia numérique, **caractérisé en ce qu'**il comprend :
- un récepteur de signal de diffusion (500) configuré pour recevoir un signal de diffusion multimédia numérique ;
- un décodeur de signal de diffusion (510) configuré pour décoder le signal de diffusion multimédia numérique reçu par le récepteur de signal de diffusion (500) ;
- un décodeur de signal audio vidéo, AV, (570) configuré pour décoder des flux de signaux AV délivrés par le décodeur de signal de diffusion (510) ;
- un fournisseur de canal d'information rapide, FIC, (530) configuré pour analyser syntaxiquement et mémoriser un FIC délivré par le décodeur de signal de diffusion (510) ;
- un fournisseur de guide de programme électronique, EPG, (540) configuré pour analyser syntaxiquement et mémoriser des informations EPG délivrées par le décodeur de signal de diffusion (510) ;
- un enregistreur (520) configuré pour enregistrer des flux de signaux AV délivrés par le décodeur de signal de diffusion (510) ;
- un premier organe de commande (550) configuré pour :
-- commander une visualisation et un enregistrement d'un programme pertinent en réponse à une commande de visualisation et d'enregistrement du programme pertinent entrée de l'extérieur,
-- passer sur un autre canal lorsque le programme pertinent est diffusé sur l'autre canal en raison d'une diffusion prolongée, une première information sur l'autre canal étant fournie par le fournisseur FIC (530), et
- un deuxième organe de commande (580) configuré pour commander le récepteur de signal de diffusion (500) et le décodeur de signal de diffusion (510) en réponse à la commande du premier organe de commande (550) pour permettre à un spectateur de visualiser le programme pertinent, **caractérisé en ce que** le premier organe de commande (550) est en outre configuré pour :
-- déterminer si d'autres programmes sont diffusés par une deuxième information mémorisée dans le fournisseur FIC (530) pendant que l'enregistrement du programme pertinent est en cours,
-- arrêter provisoirement l'enregistrement par l'enregistreur (520) lorsque les autres programmes sont diffusés, et
-- reprendre l'enregistrement de l'enregistreur (520) lorsque le programme pertinent est rediffusé.

2. Récepteur selon la revendication 1, dans lequel le fournisseur FIC (530) comprend :
- un décodeur FIC (531) configuré pour décoder le FIC délivré par le décodeur de signal de diffusion (510) ; et
- une mémoire de FIC (503) configurée pour mémoriser des informations décodées par le décodeur FIC (531) et fournir les informations au premier organe de commande (550).

3. Procédé de visualisation de programme d'un récepteur de diffusion multimédia numérique **caractérisé par** :
- la réception et l'affichage d'un programme lorsqu'une commande de visualisation du programme est entrée, le programme étant reçu sur un canal et ayant un code indiquant une date, une heure et une minute de début du programme ;
- le fait de déterminer si le programme doit être diffusé sur un autre canal en raison d'une diffusion prolongée ; et
- le fait de déterminer un nouveau canal et un nouveau code de la diffusion prolongée, le nouveau code indiquant une date, une heure et une minute de début de la diffusion prolongée ;
- le passage sur le nouveau canal pour permettre la réception du programme lorsque le code du programme est remplacé par le nouveau code.

4. Procédé d'enregistrement de programme d'un récepteur de diffusion multimédia numérique **caractérisé par** :
- l'analyse syntaxique d'informations EPG reçues et la mémorisation des informations EPG dans une mémoire EPG (545) ;
- la vérification d'un numéro de programme d'un programme à enregistrer par la mémoire EPG (545) lorsqu'une commande d'enregistrement du programme à enregistrer est entrée ;
- le fait de déterminer si un programme correspondant au numéro de programme vérifié a été reçu ;
- l'enregistrement du programme lorsqu'il est déterminé que le programme a été reçu, le programme ayant un code indiquant une date, une heure et une minute de début du programme,
- l'arrêt provisoire de l'enregistrement du programme lorsqu'il est déterminé qu'un autre programme doit être diffusé, l'autre programme ayant un autre code indiquant une date, une heure et une minute de début de l'autre programme,
- le fait de déterminer si le programme est rediffusé ; et
- l'enregistrement du programme à nouveau lorsque l'autre programme est terminé et le programme est diffusé à nouveau.

5. Procédé selon la revendication 3, dans lequel des informations relatives au canal, au code, au nouveau canal et au nouveau code sont incluses dans un canal d'information rapide, FIC, dans une trame de transmission dans une diffusion multimédia numérique.

6. Procédé selon la revendication 5, dans lequel les informations sont incluses dans une zone étendue de groupe d'information rapide, FIG, de bloc d'information rapide, FIB, dans le FIC.

7. Procédé selon la revendication 6, dans lequel le fait de déterminer si le programme doit être diffusé sur un autre canal comprend le fait de déterminer si le programme doit être diffusé sur un autre canal en raison de la diffusion prolongée en vérifiant si un drapeau de mise à jour dans la zone étendue de FIG est 1.

8. Procédé selon la revendication 4, dans lequel des informations relatives au code et à l'autre code sont incluses dans FIC dans une trame de transmission dans une diffusion multimédia numérique.

9. Procédé selon la revendication 8, dans lequel les informations sont incluses dans une zone étendue de FIG de FIB dans le FIC.

10. Procédé selon la revendication 9, dans lequel la détermination qu'un autre programme doit être diffusé est effectuée en vérifiant si un drapeau de continuation dans la zone étendue de FIG est 1.
